**Europäisches Patentamt**

**European Patent Office**

**Office européen des brevets**

(11) Veröffentlichungsnummer: **0 126 850**

**A1**

## (12) EUROPÄISCHE PATENTANMELDUNG

(21) Anmeldenummer: **84101885.6**

(22) Anmeldetag: **23.02.84**

(51) Int. Cl.³: **A 61 C 9/00**

(30) Priorität: **30.04.83 DE 3315870**

(43) Veröffentlichungstag der Anmeldung:
**05.12.84 Patentblatt 84/49**

(84) Benannte Vertragsstaaten:
**AT CH DE FR GB IT LI NL SE**

(71) Anmelder: **Scheu-Dental Inhaber Rudolf Scheu
Herstellung und Vertrieb von Dentalbedarf
Am Burgberg 20
D-5860 Iserlohn(DE)**

(72) Erfinder: **Schinhammer, Karl
Schubertstrasse 6
D-5840 Schwerte 4(DE)**

(74) Vertreter: **Patentanwälte Meinke und Dabringhaus
Dipl.-Ing. J. Meinke Dipl.-Ing. W. Dabringhaus
Westenhellweg 67
D-4600 Dortmund 1(DE)**

(54) **Zahn- und Kiefermodell.**

(57) Bei dem aus einer Grundplatte (1) und einem Zahnkranz (8) mit mehreren entfernbaren Segmenten (8a—8d) bestehenden Zahn— und Kiefermodell ist die Grundplatte auf der dem Zahnkranz zugewandten Seite mit einer Profilierung (2) versehen, welche Drehungen der einzelnen Zahnkranzsegmente gegenüber der Grundplatte verhindert. Dabei ist jedem Segment nur ein Stift (10) zugeordnet, der durch eine Bohrung (9) in der Grundplatte in eine mit dem betreffenden Segment fest verbundene Schraubhülse (12) einschraubbar ist.

Fig. 8

EP 0 126 850 A1

"Zahn- und Kiefermodell"

Die Erfindung betrifft eine Vorrichtung zur lösbaren Befestigung entfernbarer ausgesägter Segmente des zahnseitigen Teils von aus Grundkörper und zahnseitigem Teil bestehenden Dentalmodellen, wobei die entfernbaren Segmente über mit ihnen verbundene, in passenden Bohrungen im Grundkörper gleitfähige Stifte einsetz- und herausnehmbar angeordnet sind und wobei jeder Stift mit einem Gewindeende ausgebildet ist, das in eine entsprechende, mit dem zugeordneten Segment fest verbundene Schraubhülse von der Grundkörperseite her einschraubbar ist.

Die maßgetreue Wiedergabe der Gebiß- und Kieferverhältnisse eines Patienten, nämlich das zahntechnische, meist aus Gips bestehende Arbeitsmodell, muß in bestimmten Fällen in Teile zerlegbar sein, z.B. um Kronen und Brücken modellieren zu können. Der sogenannte Zahnkranz bzw. zahnseitige Teil des Modells, der Modellzähne und die für die Arbeit wichtigen Kieferpartien umfaßt, wird im allgemeinen getrennt von einem Grundkörper oder Modellsockel gegossen und in einzelne Segmente aufgesägt. Die lösbare und wiederaufsetzbare Beziehung zwischen diesen Segmenten und dem als Montagebasis dienenden Grundkörper wird durch Stifte, die sogenannten Dowel Pins, hergestellt, die am einen Ende fest in den zahnseitigen Teil, d.h. dessen

- 2 -

0126850

verschiedene Segmente, und am anderen Ende gleitend in den Grundkörper bzw. Modellsockel reichen. Die Stifte haben dabei stets eine Doppelaufgabe zu erfüllen, und zwar müssen sie für die richtige, d.h. originalgetreue Stellung der herausnehmbaren Modellzähne bzw. Segmente auf dem Modellsockel bzw. Grundkörper sorgen und ferner dafür, daß sich diese nicht ungewollt vom Modellsockel bzw. Grundkörper lösen. Eine ausreichende Festhaltung wird dabei durch genau passende Stiftaufnahmen im Grundkörper erreicht, d.h. dadurch, daß zwischen Stiften und Stiftaufnahmen ausreichende Reibungskräfte vorhanden sind, um ein unbeabsichtigtes Lösen der Segmente vom Grundkörper zu verhindern. Die richtige Stellung der die Modellzähne aufweisenden Segmente wird entweder durch eine unrunde, ein Verdrehen nicht zulassende Stiftform bei Einzelverstiftung oder durch eine paarweise Verstiftung mit runden Stiften gewährleistet.

Ein ähnlicher Effekt ergibt sich bei einem weiteren bekannten Zahn- und Kiefermodell, das ohne Stifte arbeitet und bei dem zahnseitiges Teil und Modellsockel bzw. Grundkörper einstückig gegossen werden und in eine parallel gerillte, konisch offene, den Modellsockel umgebende Verschalung eingebettet und mittels einer Fixierspange gehalten sind. Hier werden die beiden vorgenannten Funktionen durch die Vielzahl der miteinander in Eingriff befindlichen Führungsrillen bzw. Vorsprünge zwischen Mo-

0126850

dellsockel und umgebender Verschalung bewirkt.

Bei den vorbeschriebenen bekannten Zahn- und Kiefermodellen ist die durch den Paßsitz der Verbindungselemente bewirkte Friktion aber nicht in allen Phasen des Arbeitsablaufes von Vorteil. So ist schon das Lösen des gesamten zahnseitigen Teiles vom Grundkörper bei zwischen diesen Teilen angeordneten Stiften, aber auch das Lösen eines einteiligen Modelles von der umgebenden Verschalung zum anschließenden Aufsägen in Einzelsegmente wegen der sich addierenden Friktionskräfte aller Verbindungselemente nur schwierig möglich. Vor allem ist es aber problematisch, nach dem Aufsägen in einzelne Zahn- bzw. Modellsegmente nicht nur einzelne Zahn- oder Modellsegmente vom Grundkörper bzw. der Verschalung zu lösen, sondern mehrere Zahn- bzw. Modellsegmente gleichzeitig zusammen mit der an den betreffenden Segmenten angebrachten Zahnersatzmodellation in Wachs abzunehmen, um anschließend die Modellzähne einzeln aus dem Wachsmodell lösen zu können. Bei dem Versuch alles zugleich abzunehmen, treten wegen des kaum zu vermeidenden Verkantungseffektes Schwierigkeiten auf, die mit der Gefahr einer Verzerrung des Wachsmodells verbunden sind, dann nämlich, wenn die Modellzähne nacheinander aus ihrem Paßsitz zu lockern sind, um schließlich das Gesamtwerk abnehmen zu können. Man hat hierfür zwar bereits spezielle Abziehvorrichtungen entwickelt, die zur Erleichterung des vorgeschilderten Vorganges dienen sollen. Neben

- 4 -

0126850

dem für diese Spezialvorrichtungen erforderlichen Aufwand befriedigen diese Spezialvorrichtungen sämtlich aber noch nicht, d.h. vermögen die vorgeschilderten Gefahren nicht genügend sicher auszuschließen.

Bei der eingangs beschriebenen bekannten Vorrichtung (DE-OS 29 18 285) werden die zuletzt erwähnten Nachteile älterer Konstruktionen schon weitgehend dadurch beseitigt, daß durch einfaches Herausschrauben der Stifte aus den in den Segmenten des zahnseitigen Teils befestigten Schraubhülsen mehrere benachbarte Segmente gemeinsam mit auf diesen angebrachter Zahnersatzmodellation in Wachs schon wesentlich einfacher und mit geringerer Gefahr für die Unversehrtheit des Wachsmodells vom Grundkörper abgenommen werden können. Ebenso kann auch beim Herausschrauben aller Stifte der zahnseitige Teil als ganzes abgenommen werden, während andererseits auch bei eingeschraubten Stiften jederzeit die Möglichkeit besteht, einzelne Segmente mittels der an ihnen befestigten Stifte in den Grundkörper einzusetzen und wieder aus diesem herauszuziehen, um an den einzelnen Segmenten entsprechende Modellationsarbeiten vornehmen zu können. Um jedoch bei der bekannten Vorrichtung zu gewährleisten, daß jedes Segment des zahnseitigen Teils seinen genau vorbestimmten Sitz einnimmt und beibehält, ist es bei herausschraubbaren und dementsprechend kreisförmigen Querschnitt aufweisenden Stiften notwendig, für jedes Segment mindestens zwei Stifte vorzusehen, was insbesondere bei sehr kleinen Segmenten schon räumliche Probleme mit sich bringt. Hinzu kommt aber noch, daß die Stifte, um einen ausreichend festen Sitz des zugeordneten Segmentes gewährleisten zu können, relativ stramm bzw. toleranzlos in ihren zugeordneten Bohrungen im Grundkörper bzw. in in diesen eingelassenen Buchsen sitzen müssen, so daß beim Herausschrauben der Stifte Torsionskräfte auf das zugeordnete Segment ausgeübt werden, die beim Herausdrehen des ersten Stiftes noch unschädlich bleiben, beim Herausschrauben des letzten Stiftes aber das betreffende Segment zu drehen versuchen, wodurch die genau vorbestimmte Position des betreffenden Segmentes verändert wird und insbesondere das für mehrere benachbarte Segmente gemeinsame komplette Wachsmodell beschädigt werden kann.

Aufgabe der Erfindung ist daher die Schaffung einer Lösung, welche sicherstellt, daß auch bei Verwendung nur eines Stiftes für jedes Segment des zahnseitigen Teils des Modells Lageänderungen eines Einzelsegmentes beim Herausschrauben der Stifte und damit Beschädigungen von mehreren benachbarten Segmenten gemeinsamen Wachsmodellationen sicher verhindert werden, sowie gleichzeitig auch noch die Handhabung des gesamten zahnseitigen Teils sowie dessen Aufsägung in Einzelsegmente erleichtert.

Bei einer Vorrichtung der eingangs bezeichneten Art wird diese Aufgabe gemäß der Erfindung dadurch gelöst, daß der Grundkörper als an sich bekannte vorgefertigte Grundplatte ausgebildet ist, die auf ihrer dem Zahnkranz zugewandten Seite mit einer Profilierung versehen ist, welche Drehungen der einzelnen Segmente des zahnseitigen Teils gegenüber der Grundplatte verhindert und daß jedem Segment nur ein Stift zugeordnet ist.

Durch eine derartige Ausgestaltung wird, wie erkennbar ist, bei vereinfachtem Aufbau des Modells unter Verwendung einer an sich bekannten vorgefertigten Grundplatte mit Sicherheit verhindert, daß beim Herausschrauben der Stifte aus benachbarten Segmenten des zahnseitigen Teils Torsionskräfte auf einzelne Segmente und dadurch bedingt Drehbewegungen der bereffenden Segmente ausgeübt werden können, so daß auch Beeinträchtigungen eines mehreren benachbarten Segmenten gemeinsam zugeordneten Wachsmodells ausgeschlossen sind.

Bekannt ist zwar die Verwendung einer vorgefertigten Grundplatte, die direkt in der gebrauchsfertigen Form aus Kunststoff gespritzt ist (DE-OS 32 13 014), aber nur in Verbindung mit üblichen nicht herausschraubbaren Stiften, so daß die mit herausschraubbaren Stiften verbundene vorbeschriebene Problematik im bekannten Fall nicht besteht.

In Weiterbildung der Erfindung ist es besonders vorteilhaft, wenn der Grundplatte auf der dem zahnseitigen Teil

0126850

zugewandten Seite im Gaumen- bzw. Zungenbereich eine lösbare Festhalteplatte zugeordnet ist, die zur Verbindung des zahnseitigen Teils mit der Grundplatte dient und einen hinterschnittenen, dem zahnseitigen Teil zugewandten Rand aufweist und wenn vorzugsweise die lösbare Platte mittels Verbindungsschraube mit der Grundplatte verbindbar ist.

Auf diese Weise können nicht abnehmbar zu gestaltende Segmente des zahnseitigen Teils alle auf einmal in einfacher Weise mit der den Grundkörper bildenden Grundplatte verbunden werden. Alle Segmente, die nicht extra aus dem zahnseitigen Teil herausgetrennt werden, bilden mit der lösbaren Festhalteplatte eine Einheit und sind mit dieser an die Grundplatte koppelbar. Ein weiterer wichtiger Vorteil besteht dabei noch darin, daß der gesamte zahnseitige Teil durch die Festhalteplatte auch gegen Zerbrechen gesichert und dementsprechend dessen Handhabung für den Aufsägevorgang des zahnseitigen Teils wesentlich verbessert wird. Wenn nämlich nach der Fertigstellung des zahnseitigen Teils und dem Herausschrauben der Schraubstifte der gesamte zahnseitige Teil mit der Festhalteplatte abgenommen ist, so weisen zahnseitiger Teil und Festhalteplatte eine ebene Auflagefläche auf, so daß der zahnseitige Teil zum Zwecke der Aufsägung in Segmente satt aufgelegt und auch manuell auf einem Sägetisch geführt werden, d.h. seitlich einer im wesentlichen vertikal gerichteten Säge zugeführt werden kann. Das Aufsägen des

zahnseitigen Teils wird dabei dadurch erleichtert, daß die Festhalteplatte den zahnseitigen Teil praktisch armiert und somit ein sicheres Sägen erlaubt. Zudem bestimmt die Festhalteplatte das Ende des Sägeschnitts und bildet dort eine Sollbruchstelle zum besseren Abbrechen der eingesägten Segmente.

Die Erfindung ist nachstehend anhand der Zeichnung beispielsweise näher erläutert. Diese zeigt in

Fig. 1 eine Vorrichtung gemäß der Erfindung in einem vertikalen Teilschnitt im fertigen Zustand,

Fig. 2 eine Grundkörperplatte der Vorrichtung gemäß der Erfindung in Draufsicht,

Fig. 3 eine mit der Grundkörperplatte nach Fig. 2 verbindbare Festhalteplatte in Druntersicht,

Fig. 4 einen Schnitt längs der Linie A-B der Fig. 3,

Fig. 5 eine perspektivische Darstellung der Grundkörperplatte nach Fig. 2 mit auf dieser montierter Festhalteplatte nach den Fig. 3 und 4,

Fig. 6 einen erfindungsgemäßen Stift mit zugeordneter Schraubhülse mit äußerer Profilierung zum Ein-

- 9 -

0126850

gießen in ein zugeordnetes Segment,

Fig. 7 einen Stift mit außen glatter Schraubhülse
zum Einkleben in eine entsprechende Bohrung
eines Segmentes und in

Fig. 8 eine perspektivische Darstellung eines fertigen
Zahn- und Kiefermodells mit mehreren gleichzeitig herausgenommenen Segmenten und an diesen
befindlicher Zahnersatz-Wachsmodellation und
vorher aus den betreffenden Segmenten herausgeschraubten Stiften.

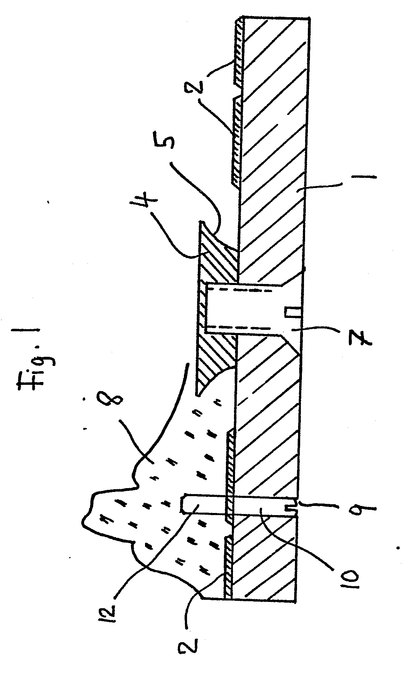

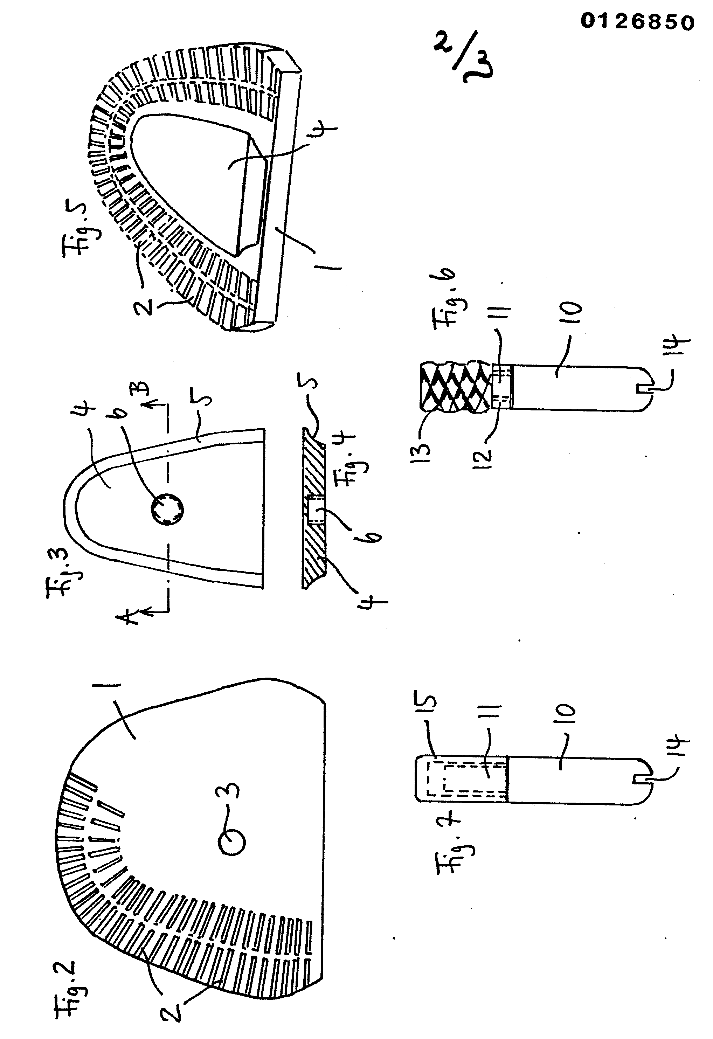

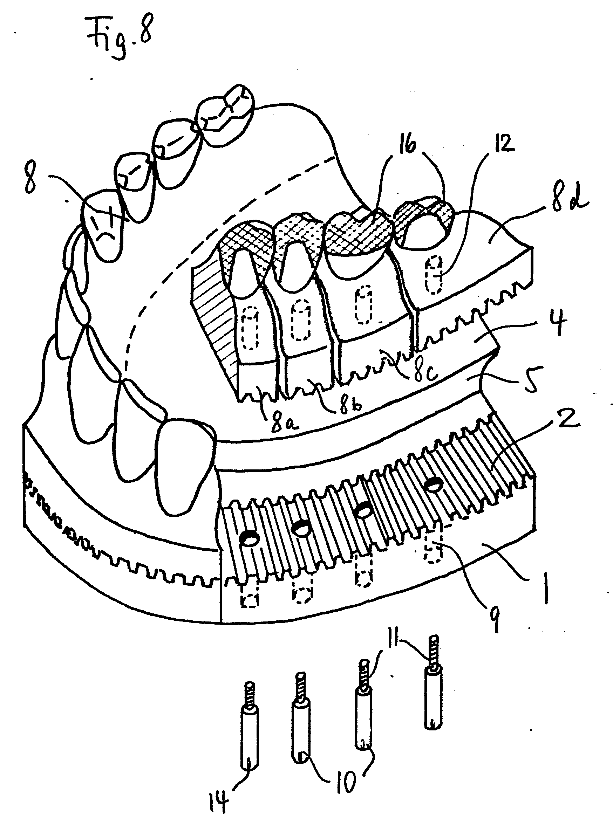

Das in Fig. 1 im fertigen Zustand wiedergegebene Zahn- und
Kiefermodell nach der Erfindung weist eine in Fig. 2 in
Draufsicht dargestellte vorzugsweise aus geeignetem
Kunststoff bestehende Grundplatte 1 auf, die an ihrer
Oberseite mit Profilierungen 2 versehen ist sowie mit
einer etwa mittigen Bohrung 3 zur Befestigung einer in den
Fig. 3 und 4 für sich wiedergegebenen vorzugsweise ebenfalls aus Kunststoff bestehenden Festhalteplatte 4 mit
einem umlaufenden hinterschnittenen Rand 5 und einer mit
Gewinde versehenen Sackbohrung 6, derart, daß die Festhalteplatte 4 an der Grundplatte 1 mittels einer Befestigungsschraube 7 (s. Fig. 1) befestigbar ist.

Der in Fig. 1 mit dem Bezugzeichen 8 angedeutete zahnseitige Teil des Modells bzw. Zahnkranz wird vorzugsweise gegossen, nachdem in der Grundplatte 1 eine Anzahl von Bohrungen 9 gebohrt worden ist, in die Stifte 10 mit oberem Gewindeende 11 und auf dieses geschraubter Schraubhülse 12 eingesetzt worden sind, wobei in diesem Fall die Schraubhülsen 12 mit einer äußeren Profilierung 13 (Fig. 6) versehen sind, derart, daß beim Gießen des Zahnkranzes eine sichere Festhaltung der Schraubhülse 12 mit Profilierung 13 im fertig gegossenen Zahnkranz 8 gewährleistet ist.

Nach dem Gießen und Erhärten des Zahnkranzes 8 werden nun sämtliche Stifte 10 aus ihren zugeordneten Schraubhülsen 12 mittels eines an ihrem unteren Ende befindlichen Schraubenzieherschlitzes 14 aus den Bohrungen 9 herausgeschraubt und anschließend wird die Verbindungsschraube 7 zwischen Grundplatte 1 und Festhalteplatte 4 gelöst, worauf der gesamte Zahnkranz 8 zusammen mit der Festhalteplatte 4 in einfachster Weise abgenommen werden kann, wobei die Festhalteplatte 4 praktisch als Armierung für den Zahnkranz dient, so daß dieser gegen Abbröckeln oder sonstige Beschädigungen gut geschützt ist und vor allem anschließend beim Aufsägen des Zahnkranzes in dessen einzelne Segmente gut handhabbar ist. Wie vorstehend schon erwähnt, ist es dabei besonders günstig, daß die Unterseiten von Zahnkranz und Festhalteplatte 4 völlig eben sind, so daß sich eine satte Auflage auf einer Bearbeitungsfläche ergibt, beispielsweise der gesamte Zahnkranz mit Festhalteplatte 4 seitlich über eine Sägetischfläche einer vertikal arbeitenden Säge zugeführt werden kann, so daß saubere Schnitte zur Bildung der einzelnen Zahnkranzsegmente geführt werden können. Dabei kann jeder Schnitt ein Stück in die Festhalteplatte 4 hinein erfolgen, so daß dann anschließend die mit dem betreffenden Zahnkranzsegment in Berührung befindliche Teilfläche der Festhalteplatte 4 als Sollbruchstelle beim Heraustrennen des betreffenden Zahnkranzsegmentes dient.

Wie erkennbar ist, brauchen aufgrund der Vorsehung der Festhalteplatte 4 diejenigen Zahnkranzteile, die einer nachfolgenden Bearbeitung nicht bedürfen, mit der Grundplatte 1 überhaupt nicht verstiftet zu werden, da diese Zahnkranzteile mit der Festhalteplatte 4 nach dem Aufsägen des Zahnkranzes mittels der Befestigungsschraube 7 wieder ausreichend sicher mit der Grundplatte 1 verbindbar sind. Die mit nachfolgend zu behandelnden Modellzähnen versehenen Zahnkranzsegmente werden anschließend wieder an ihre ursprüngliche Stelle auf der Grundplatte 1 zurückversetzt und mittels ihrer zugeordneten Stifte 10 an der Grundplatte 1 mittels Friktionssitzes zwischen den Stiften 10 und den zugeordneten Bohrungen 9 derart befestigt, daß eine leichte Herausnahme und ein leichtes Wiedereinsetzen einzelner Zahnkranzsegmente möglich ist. Dabei ist, wie erkennbar, für jedes Zahnkranzsegment ein einzelner Stift 10 ausreichend, weil ein verdrehsicherer Sitz jedes Zahnkranzsegmentes gegenüber der Grundplatte 1 durch die Profilierungen 2 an der Grundplatte 1 und die entsprechenden Profilierungen im Zahnkranzsegment gewährleistet ist.

Sollen nun mehrere Zahnkranzsegmente 8a, 8b, 8c, 8d auf einmal mit an diesen angebrachten Zahnersatz-Modellationen 16 in Wachs von der Grundplatte 1 abgenommen werden, so kann dies in einfachster Weise ohne jede Beschädigungsgefahr für die Wachsmodellation dadurch erfolgen, daß die den betreffenden Zahnkranzsegmenten zugeordneten Stifte 10 vorher aus ihren in den Zahnkranzsegmenten festsitzenden Schraubhülsen 12 herausgeschraubt werden, so wie dies in Fig. 8 verdeutlicht ist. Das Wiedereinsetzen in den übrigen Teil des Zahnkranzes kann in gleich einfacher Weise erfolgen, worauf dann die betreffenden Stifte wieder in die zugeordneten Schraubhülsen eingeschraubt werden.

Das Einbohren der Aufnahmebohrungen 9 in der Grundplatte 1 kann mit Hilfe eines Markierungsgerätes mit Sichtpunkten erfolgen, nach welchen die Löcher gebohrt werden, und zwar, wie bekannt, in apikal-axialer Ausrichtung zu den Modellzähnen, wozu ein Bohrständer oder eine andere Parallel-Bohrvorrichtung eingesetzt werden kann. Es ist auch möglich, die Grundplatte mit einer speziellen Hilfsvorrichtung so dem Abdrucknegativ, in welchem der Zahnkranz gegossen wird, zuzuordnen, daß mit einem bekannten Parallel-Bohrgerät das Aufsuchen der Bohrstelle durch Anpeilen des Abdruckes und Bohren in einem Zug erfolgen kann.

Weiterhin ist es auch möglich, zuerst den Zahnkranz auf der Grundplatte 1 mit Festhalteplatte 4 zu gießen und dann die jeweilige Durchgangsbohrung in der Grundplatte zur Aufnahme eines Stiftes sowie das Sackloch zur Aufnahme der Schraubhülse im Zahnkranz vom Boden des Sockels aus in einem Zug zu bohren. Diese Verfahrensweise eignet sich besonders dazu, um dann anschließend nach Lösen der Schraubverbindung zwischen Grundplatte und Festhalteplatte den Zahnkranz insgesamt mit der Festhalteplatte abzuheben, da dann noch keinerlei Verbindungsstifte zwischen Grundplatte und Zahnkranz vorhanden sind. Die in diesem Fall außen glatten Schraubhülsen 15 (s. Fig. 7) können dann in die Sacklöcher im Zahnkranz in der zuvor beschriebenen Weise eingeklebt werden, worauf dann anschließend der Zahnkranz in Segmente aufgesägt wird, ohne daß dabei die Schraubhülsen im Zahnkranz die satte Auflage auf dem Sägetisch stören, da diese nicht aus der insgesamt planen Basisfläche des Zahnkranzes mit Festhalteplatte herausragen. Die aufgesägten einzelnen Zahnkranzsegmente können dann mit ihren zugeordneten Stiften verschraubt werden und die Zahnkranzsegmente können dann lagerrichtig auf die Grundplatte gesetzt und nach Bedarf beliebig oft herausgenommen und wieder zurückgesetzt werden, wobei die präzise Position stets durch die Verzahnung infolge der Profilierung zwischen Grundplatte und Zahnkranzsegmenten gewährleistet ist.

Natürlich sind zahlreiche Abänderungen des beschriebenen Ausführungsbeispieles möglich, ohne den Grundgedanken der Erfindung zu verlassen. So kann die Profilierung auf der Grundplatte auch in beliebiger anderer Weise geformt sein, beispielsweise durch punktförmige, kegelige Vorsprünge. Anstelle der Schraubenzieherschlitze 14 kann in den Schraubstiften 10 auch eine rechteckige Sackbohrung zum Ansetzen eines entsprechenden Betätigungsschlüssels ausgebildet sein u. dgl. mehr.

Patentansprüche :

1. Vorrichtung zur lösbaren Befestigung entfernbarer ausgesägter Segmente (8a-8d) des zahnseitigen Teils (8) von aus Grundkörper (1) und zahnseitigem Teil bestehenden Dentalmodellen, wobei die entfernbaren Segmente über mit ihnen verbundene, in passenden Bohrungen (9) im Grundkörper gleitfähige Stifte (10) einsetz- und herausnehmbar angeordnet sind und wobei jeder Stift mit einem Gewindeende (11) ausgebildet ist, das in eine entsprechende, mit dem zugeordneten Segment fest verbundene Schraubhülse (12) von der Grundkörperseite her einschraubbar ist,
dadurch gekennzeichnet,
daß der Grundkörper als an sich bekannte vorgefertigte Grundplatte (1) ausgebildet ist, die auf ihrer dem Zahnkranz (8) zugewandten Seite mit einer Profilierung (2) versehen ist, welche Drehungen der einzelnen Zahnkranzsegmente (8a, 8b, 8c, 8d) gegenüber der Grundplatte verhindert und daß jedem Zahnkranzsegment nur ein Stift (10) zugeordnet ist.

2. Zahn- und Kiefermodell nach Anspruch 1,
dadurch gekennzeichnet,
daß der Grundplatte (1) auf der dem Zahnkranz (8) zugewandten Seite im Gaumen- bzw. Zungenbereich eine lösbare Festhalteplatte (4) zugeordnet ist, die zur Verbindung des Zahnkranzes (8) mit der Grundplatte (1) dient und einen hinterschnittenen, dem Zahnkranz (8) zugewandten Rand (5)
aufweist.

3.  Zahn- und Kiefernodell nach Anspruch 2,
    dadurch gekennzeichnet,
    daß die lösbare Festhalteplatte (4) mittels Verbindungs-
    schraube (7) mit der Grundplatte (1) verbindbar ist.

Fig. 1

Fig. 2

Fig. 3

Fig. 4

Fig. 5

Fig. 6

Fig. 7

Fig.8

Europäisches
Patentamt

# EUROPÄISCHER RECHERCHENBERICHT

**0126850**
Nummer der Anmeldung

EP 84 10 1885

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| D,Y | DE-A-2 918 285 (WEISSMAN) <br> * Seite 9, Zeile 16 - Seite 10, Zeile 18; Figuren 11-13 * | 1 | A 61 C 9/00 |
| Y | DE-B-2 151 671 (EBERHARD) <br> * Spalte 3, Zeile 19 - Spalte 4, Zeile 8 * | 1 | |
| A | DE-U-7 412 852 (W.C. HERAEUS GMBH) <br> * Seite 1, Zeile 1 - Seite 3, Zeile 15 * | 1 | |
| A | DE-A-2 949 697 (ZEISER) <br> * Ansprüche 1, 9, 13 * | 1 | |
| P,X | US-A-4 398 884 (HUFFMAN) <br> * Spalte 2, Zeile 67 - Spalte 3, Zeile 30; Figuren 1-5 * | 1 | **RECHERCHIERTE SACHGEBIETE (Int. Cl. ³)** <br><br> A 61 C 9/00 <br> A 61 C 13/00 |
| A | US-A-3 702 027 (MARSHALL et al.) <br> * Figuren 2-5 * | 2 | |
| D,P <br> A | DE-A-3 213 014 (ZEISER) | | |
| A | DE-A-3 208 648 (KYOTO CERAMIC CO.) | | |

Der vorliegende Recherchenbericht wurde für alle Patentansprüche erstellt.

| Recherchenort <br> BERLIN | Abschlußdatum der Recherche <br> 10-07-1984 | Prüfer <br> SIMON J J P |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82